# EUROPEAN PATENT APPLICATION

(11) **EP 4 755 824 A1**
(43) Date of publication of application: **10.06.2026**
(21) Application number: 23946907.5
(22) Date of filing: 28.07.2023
(51) Int. Cl.: B65G 15/00, B65G 15/22, G01G 19/00, G01G 19/387

(54) **DEVICE, SYSTEM AND COMBINING METHOD FOR PACKAGING FROZEN FOODS**

(71) Applicant: Meritens S.A, Puerto Varas (CL)
(72) Inventor: WINTER BARROS, Patricio Luis, Chonchi, Región de los Lagos (CL); ARENTSEN JIMÉNEZ, Lucas Balarama, Chonchi, Región de Los Lagos (CL); SOSA CABEZA, Oswaldo Alexandres, Chonchi, Región de Los Lagos (CL); DAROCH LIZAMA, Luis Alberto, Castro, Región de los Lagos (CL); WINTER BARROS, Fernando José, Puerto Varas, Región de los Lagos (CL)
(74) Representative: Hertin und Partner Rechts- und Patentanwälte PartG mbB
(86) International application number: PCT/CL2023/050063
(87) International publication number: WO 2025/024944

(57) **Abstract**

This technology is aimed at a device, system, and combination method for packaging frozen items that minimizes the margin of excess weight delivered in each box or distribution set, reduces the number of workers required to operate the technology, and prevents shocks and impacts on the processed items to avoid developing microfractures and breaks in the packaging of frozen products.

## Description

### FIELD OF THE INVENTION

The present invention relates to combinatorial weighing devices, systems, and methods for selecting a combination of items whose total weight is within a predetermined target weight range. In particular, the present invention relates to a combinatorial device, system, and method for packaging vacuum-packed frozen items.

### STATE OF THE ART

Currently, various vacuum-packed frozen products are packaged in the industry and grouped into distribution boxes or batches that must meet a minimum weight. To perform this task, the weight of multiple products is measured individually and then the different combined weights are evaluated, seeking the combination of weights that minimizes the margin of overweight delivered in each distribution box.

The task of individually measuring the weight of multiple products and then evaluating the different combined weights is performed by groups of workers manually operating multiple conventional scales or by combination scales that simultaneously measure the weight of multiple products and computationally determine the combination of weights that minimizes the margin of overweight delivered in each distribution box.

In the latter case, once a combination scale has identified the combination of weights that minimizes the margin of overweight delivered in each distribution box, the products are sent for packaging either manually or by unloading into storage facilities. Systems with automatic unloading are faster and more efficient than systems that are unloaded manually by operators, but they expose the products to shocks and impacts.

It is important to note that when working with vacuum-packed frozen products, such as pieces of fish or other frozen meats packaged in vacuum packaging, the load is fragile. This is because, at temperatures equal to or below 0°C, the polymer or plastic packaging used to store the products becomes fragile and brittle, so when exposed to shocks and impacts, they develop microfractures and breaks that cause them to lose their vacuum-packed condition, resulting in product losses.

It also happens that in combination scales, the process of individually measuring the weight of products is carried out on dynamic scales associated with conveyor belts that are less accurate than static scales, so the margin of overweight delivered in each distribution box is greater due to the accumulated error in the measurement of individual weights. This is because the measurement error distribution of each scale is taken into account in order to achieve the minimum required weight.

Other combination scales use static scales that are more accurate in measuring weights, but require operators to load and/or unload them manually, so the process is limited to the sorting speed of human operators, the speed of box packing is reduced, and the system is more exposed to deviations and losses due to human error.

In view of these problems, various alternatives have been sought to optimize the packaging of vacuum-packed frozen products in boxes or distribution batches that must meet a minimum weight.

Among the known alternatives, publication CN110239915B can be mentioned, which describes a combination scale with a main body provided internally with a single-chip microcomputer control system. One surface of the upper end of the main body of the scale is equipped with a weighing conveyor mechanism. The conveyor mechanism is provided with a weight sensor. The weight sensor is electrically connected to the single-chip microcomputer control system. The outer surface of the conveyor belt is secured with a cushioning zone.

The technology described in the said publication CN110239915B features a dozen conveyor belts with dynamic scales distributed on two sides of the machine, which then automatically unload the selected weighed products in combination onto a central conveyor belt. However, it has been observed that the accuracy of the dynamic scales used is lower than that of conventional static scales, so the margin of overweight delivered to each distribution box is greater due to the accumulated error in the measurement of individual weights. Additionally, it has been observed that when the weighed and selected products pass from the conveyor belts with dynamic scales to the central conveyor belt, they suffer shocks and impacts, both from the drop in level and from the sudden 90° change in direction experienced by the products when changing belts. It has also been noted that the technology described in publication CN110239915B requires two human operators, one on each side of the device, to manually load the six conveyor belts with dynamic scales on each side of the device, reducing its operating speed and leaving it exposed to human error.

Another prior art document is publication JP5432031B2, which describes a semi-automatic combination scale that has multiple measuring units to record the weight of different items. A determination unit determines a weight range for each item measured based on weight ranges. The combined weight calculation is performed for a set of products of the same weight range. The number of combined measured objects is obtained by adding the number of combinations of objects in one range and the number of combinations of objects in another range, so that to select a combination of items also using a permitted number of objects as a range. The semi-automatic combination scale is used for handling items such as fish, seafood, and chicken meat, and can also be used with bonito, squid, and octopus.

The technology described in the said publication JP5432031B2 comprises a series of gates that drop the products onto different stages and conveyor belts, causing the heavy items to suffer shocks and impacts that make this technology unsuitable for use with frozen products in vacuum packaging, as the packaging will suffer microfractures and lose its internal vacuum.

In view of the above, having new alternatives is necessary that allow products to be combined in order to minimize the margin of excess weight delivered in each distribution box, reduce the number of workers required to operate, and avoid or minimize the blows and impacts that cause microfractures and breaks in the packaging of vacuum-sealed frozen products.

### SUMMARY DESCRIPTION OF THE INVENTION

This technology is aimed at a device, system, and combination method for packaging vacuum-packed frozen items that minimizes the margin of excess weight delivered in each box or distribution set, reduces the number of workers required to operate the technology, and prevents shocks and impacts on the processed items to avoid developing microfractures and breaks in the packaging of vacuum-sealed frozen products.

### DESCRIPTION OF THE FIGURES

Figure 1 shows a schematic perspective view of one of the embodiments of the combinatorial weighing device of the present technology.
Figure 2 shows a schematic side view, cross-section illustrating the position of the individual conveyor belts and the collection conveyor belt used in one of the embodiments of the present technology.
Figure 3 shows a schematic plan view of one embodiment of the combinatorial weighing device of the present technology with a row of individual conveyor belts, a static scale, and a packaging receptacle.
Figure 4 shows a schematic plan view of one embodiment of the combinatorial weighing device of the present technology with two rows of individual conveyor belts, two static scales, and a packaging receptacle.
Figure 5 shows a schematic perspective view of one embodiment of the combinatorial weighing system of the present technology with two combinatorial weighing devices, a central controller, and a bidirectional packaging conveyor belt.
Figure 6 shows a schematic side sectional view illustrating a static scale with a frozen product on it with the retractable load conveyors in a retracted position to allow weighing of the product.
Figure 7 shows a schematic side view in cross-section illustrating the static scale of Figure 6 with the retractable load conveyors in the raised position lifting the weighed frozen product to remove the weighed product from the static scale.
Figure 8 shows a schematic side view cross-section illustrating an individual conveyor belt in a horizontal position with a frozen product on it.
Figure 9 shows a schematic side view cross-section illustrating the single conveyor belt of Figure 8 in an inclined position to transfer the frozen product to the collection conveyor belt.

### DETAILED DESCRIPTION OF THE INVENTION

The present technology relates to a device, a system, and a method for combinatorial weighing for packaging vacuum-packed frozen items that minimizes the margin of overweight delivered in each box or distribution set, reduces the number of workers required to operate the technology, and prevents shocks and impacts on the processed items to avoid developing microfractures and breaks in the packaging of vacuum-sealed frozen products, using static scales with retractable load conveyors to weigh each product and then transfer them to at least one row of individual conveyor belts, where each individual conveyor belt is equipped with a set of actuators that activate the movement of the individual conveyor belt and also activate a rotation of the individual conveyor belt so that it can alternate between a horizontal position and an inclined position.

A controller or central controller receives the weight recorded by the static scale for each frozen product and associates it with the individual conveyor belt holding each product, so that the controller or central controller evaluates different combinations of frozen products held on the individual conveyor belts and selects the combination that minimizes an overweight margin above a target weight. When a combination of products has been selected, the controller controls the sets of actuators of the individual conveyor belts holding the selected products to tilt their respective individual conveyor belts to the inclined position and transfer the selected products to a collection conveyor belt that transfers the products for subsequent joint packaging.

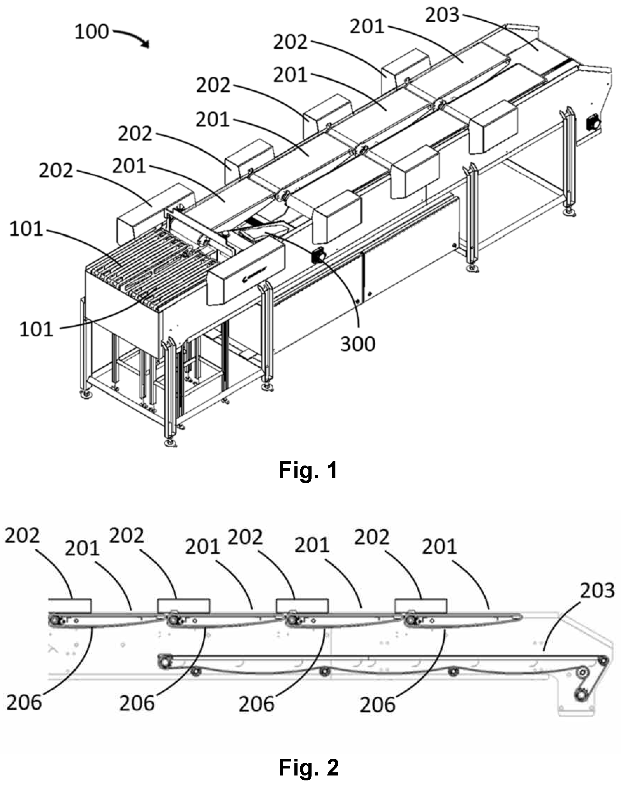

Figure 1 shows a schematic perspective view of one embodiment of the combinatorial weighing device 100 of the present technology, where two rows of individual conveyor belts 201 with their actuator assemblies 202 can be seen, with one of the individual conveyor belts 201 in an inclined position holding a frozen product 300. Two static scales 101 are also visible, each associated with a row of individual conveyor belts 201.

Figure 2 shows a schematic side view cross-section illustrating the position of the individual conveyor belts 201 with their conveyor belts 206, actuator assemblies 202, and a collecting conveyor belt 203 used in one of the embodiments of the present technology.

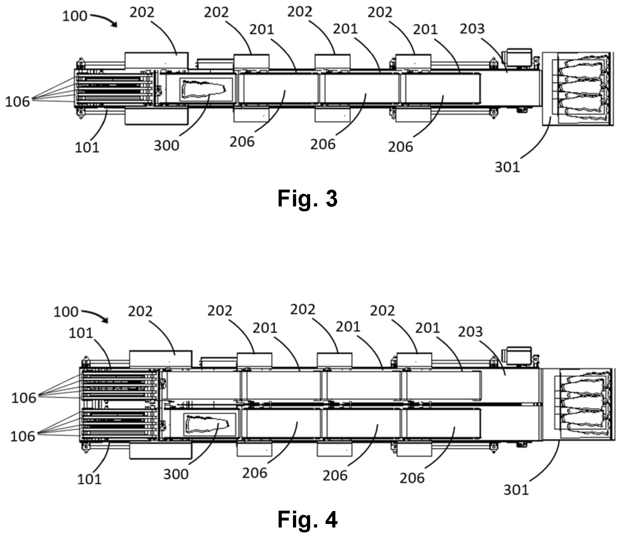

Figure 3 shows a schematic plan view of one embodiment of the combinatorial weighing device 100 of the present technology with a row of individual conveyor belts 201 with their conveyor belts 206, actuator assemblies 202, a static scale 101 with multiple retractable belts 106, and a packaging receptacle 301.

Figure 4 shows a schematic plan view of one embodiment of the combinatorial weighing device 100 of the present technology with two rows of individual conveyor belts 201, two static scales 101, each associated with a row of individual conveyor belts 201, and a packaging receptacle 301.

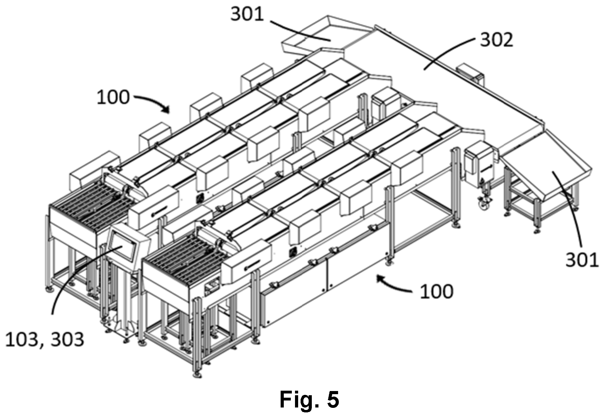

Figure 5 shows a schematic perspective view of one embodiment of the combinatorial weighing system of the present technology with two combinatorial weighing devices 100, a controller or central controller 103, 303, and a bidirectional packaging conveyor belt 302 with a packaging receptacle 301 at each end.

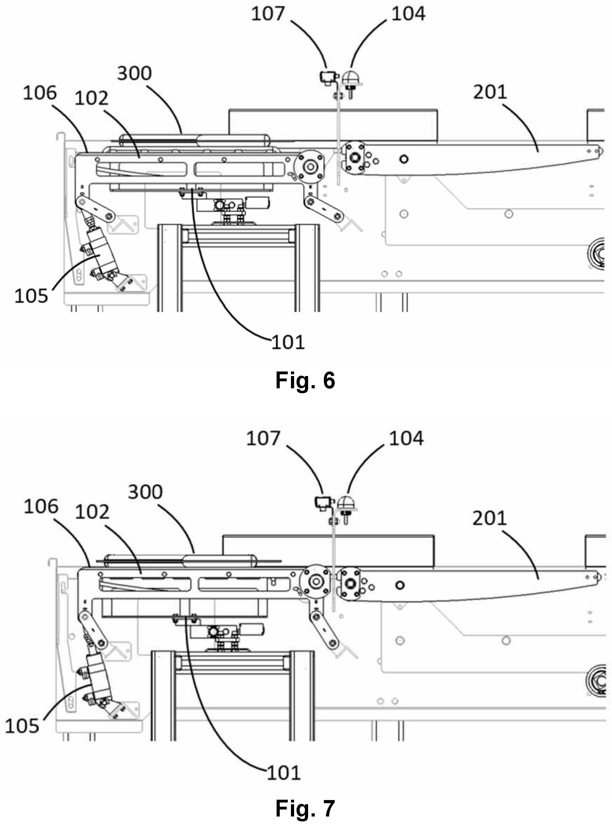

Figure 6 shows a schematic side view cross-section illustrating a static scale 8101 with a frozen product 300 on it with the retractable load conveyors 102 in a retracted position to allow weighing of the frozen product 300.

Figure 7 shows a schematic side view cross-section illustrating the static scale of Figure 6 with the retractable load conveyors 102 in the raised position lifting the weighed frozen product 300 to remove the weighed frozen product 300 from the static scale by means of the retractable belts 106, allowing the frozen product 300 to be transferred to the first individual conveyor belt 201 in its row.

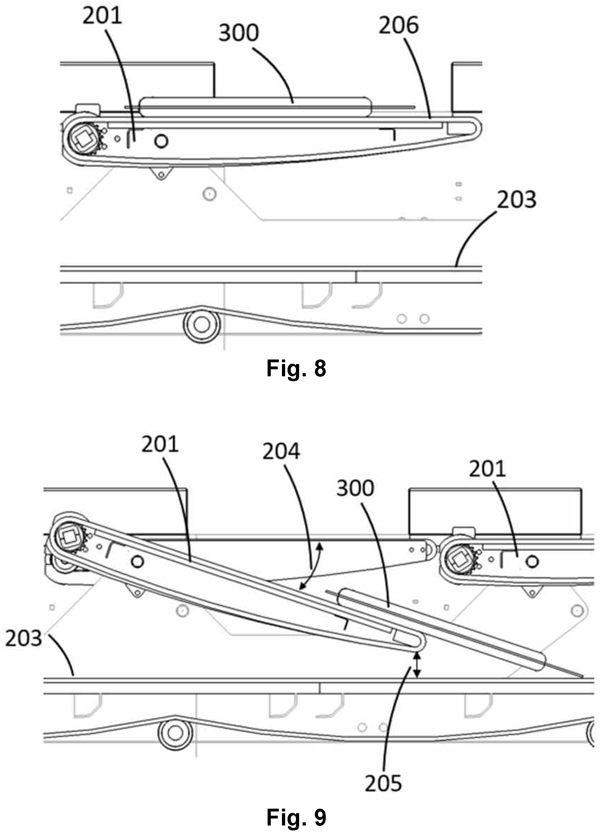

Figure 8 shows a schematic side view in cross-section illustrating an individual conveyor belt 201 in a horizontal position with a frozen product 300 on it.

Figure 9 shows a schematic side view in cross-section illustrating the individual conveyor belt from Figure 8 in an inclined position to transfer the frozen product 300 to the collecting conveyor belt 203. Figure 9 also illustrates the angle of inclination 204 at which the individual conveyor belt is inclined in its inclined position and illustrates the clearing 105 between the individual conveyor belt 201 in the inclined position and the collecting conveyor belt 203.

In one aspect, the present technology relates to a combinatorial weighing device 100 comprising at least one static scale 101 with retractable load conveyors 102 that descend to a retracted position to allow each frozen product 300 to be weighed and rise to a raised position to remove the frozen product 300 weighed by the static scale 101; the use of a static scale 101 allows each frozen product 300 to be weighed more accurately compared to dynamic scales, and the use of retractable load conveyors 102 reduces product handling because it allows the weighed frozen product 300 to be removed from the static scale 101 without operator intervention.

The device also has at least one row of individual conveyor belts 201, where each individual conveyor belt 201 receives a frozen product 300 weighed on the at least one static scale 101, where each individual conveyor belt 201 is equipped with a set of actuators 202. Having sets of individual conveyor belts 201 organized in rows allows the frozen products 300 to be transferred between the different individual conveyor belts 201 without operator intervention and allows a single static scale 101 to be used for an entire row of individual conveyor belts 201, thus reducing the need for additional static scales 101. The set of actuators 202 for each individual conveyor belt 201 allows both the movement of the conveyor belt 206 of the individual conveyor belt 201 to be activated and also allows the individual conveyor belt 201 to be alternated between a horizontal position and an inclined position, with the horizontal position being used to receive weighed frozen products 300, hold them on the individual conveyor belt 201, and transfer them to the next individual conveyor belt 201 in the row, while the inclined position is used to unload the frozen products 300 downwards onto the collection conveyor belt 203.

The device also has at least one collection conveyor belt 203 that receives weighed frozen products 300 from the plurality of individual conveyor belts 201, gathering and transporting the selected weighed frozen products 300.

The device also has a controller 103, which receives the weight recorded by the static scale 101 for each frozen product 300 and associates it with the individual conveyor belt 201 that holds each frozen product 300, where the controller 103 evaluates different combinations of frozen products 300 held on the individual conveyor belts 201 and selects the combination that minimizes a margin of overweight above a target weight, where the controller controls the sets of actuators 202 of the individual conveyor belts 201 that hold the selected frozen products 300, so that the actuator assemblies 202 tilt their respective individual conveyor belts 201 to the inclined position and transfer the selected frozen products 300 to the collection conveyor belt 203.

The retractable load conveyors 102 have belt actuators that drive the movement of the belts of their retractable conveyor belts 106, where said belt actuators can be, for example, servomotors with reduction gearboxes, servomotors without reduction gearboxes, stepper motors with reduction gearboxes, stepper motors without reduction gearboxes, motor drums, or pneumatic motors.

The retractable load conveyors 102 have lifting means 105 that drive the translational movement of the retractable load conveyors 102 to raise or lower them, where said lifting means 105 comprise, for example, pneumatic pistons, hydraulic pistons, pneumatic rotary actuators, servomotors with gearboxes, servomotors without gearboxes, stepper motors with gearboxes, or stepper motors without gearboxes. The translational movement of the retractable load conveyors 102 may involve both vertical and lateral movement of the retractable load conveyors 102, where the vertical movement removes the frozen products 300 from the static scale 101 and the lateral movement brings the retractable load conveyors 102 closer to the individual conveyor belt 201 closest to the corresponding static scale 101.

In another embodiment of the present technology, the combinatorial weighing device 100 comprises at least two static scales 101 with retractable load conveyors 102, where each static scale 101 is associated with a row of individual conveyor belts 201 aligned with one of the static scales 101.

In another embodiment of the present technology, the combinatorial weighing device 100 comprises a packaging receptacle 301 at the end of the collection conveyor belt 203. In some embodiments of the present technology, the packaging receptacles 301 are equipped with a load cell that communicates to the controller 103 or a central controller 303 whether the packaging receptacles 301 are loaded and/or communicates the weight of the load on the packaging receptacles 301, so that if there are no free packaging receptacles 301, the controller 103 or central controller 303 stops the actuator assemblies 202 of the individual conveyor belts 201 to prevent new selections of frozen products 300 from being unloaded until a packaging receptacle 301 becomes free.

The static scales 101 may be equipped with indicator lights 104 that emit a light signal to indicate to operators when it is appropriate to load frozen products 300 onto the static scales 101, preventing operators from unnecessarily handling the frozen products 300. The light indicators 104 may be associated with different color codes, for example, red light to stop the weighing process and green light to indicate that a new frozen product 300 should be placed on the static scale.

The controller 103 or the central controller 303 controls the actuator assemblies 202 of the individual conveyor belts 201 in a horizontal position so that the conveyor belts 206 of the individual conveyor belts 201 are activated to move the frozen products 300 between the individual conveyor belts 201 of the same row.

In some embodiments of the present technology, the controller 103 or the central controller 303 calculates the drive time of the actuator assemblies 202 based on the horizontal length of the individual conveyor belts 201 and the separation between them so that when the movement stops, each frozen product 300 is located around the center of its respective individual conveyor belt 201.

In other embodiments of the present technology, photoelectric sensors 107 are incorporated between the retractable load conveyors 102 and the individual conveyor belt 201 closest to the static scale 101 of the corresponding row. The photoelectric sensors 107 detect when a package of frozen product 300 or part thereof is located between the retractable load conveyors 102 and the individual conveyor belt 201 closest to the static scale 101, and then send a signal to the controller 103 or central controller 303 so that the controller 103 or central controller 303 activates the set of actuators of the individual conveyor belts 201 in the row, activating belt-actuating elements that drive the movement of the conveyor belts 206 of their individual conveyor belts 201. This allows the frozen products 300 to be transported more accurately between the individual conveyor belts 201 compared to calculating the drive time based on the length and spacing of the individual conveyor belts 201, as operators can place the frozen products in different locations on the static scale 101, such as positions further forward or further back in the weighing area of the static scale 101 with respect to other frozen products 300. This also prevents the frozen products from colliding with each other on the individual conveyor belts 201 or accidentally colliding with the drive of the individual conveyor belts 201 when they unload products downwards, thus preventing damage to the packaging.

The individual conveyor belts 201 have belt-driving elements that drive the movement of the conveyor belts 206 of their individual conveyor belts 201, where said belt-driving elements comprise, for example, servomotors with gearboxes, servomotors without gearboxes, stepper motors with gearboxes, stepper motors without gearboxes, motor drums, or pneumatic motors. Servomotors are preferred for the belt drive elements because they allow the movement to be stopped and halted with precision, preventing the equipment from overheating, and also allow the direction of rotation to be reversed if necessary. Servomotors with gearboxes are particularly energy efficient in this application.

The individual conveyor belts 201 have rotation elements that drive the rotational movement that tilts the individual conveyor belts 201 to alternate the individual conveyor belt 201 between a horizontal position and an inclined position, where said rotation elements may comprise, for example, pneumatic pistons, hydraulic pistons, pneumatic rotary actuators, servomotors with gearboxes, servomotors without gearboxes, stepper motors with gearboxes, or stepper motors without gearboxes. Double-acting pneumatic pistons are preferred for the rotating elements due to their comparatively simple regulation, control, and actuation compared to other devices. They are also easier to replace in the event of failure, as they do not require hydraulic fluids that contaminate the work area, but instead use gases such as air.

The individual conveyor belts 201 have a polymer cover on their conveyor belt 206, which prevents the frozen products 300 from sliding on the belt when being transported horizontally between different individual conveyor belts 201 or when being unloaded onto the collecting conveyor belt 203 when the actuator assemblies 202 tilt the individual conveyor belt 201 to the inclined position.

In one aspect of the present invention, polymeric materials have been selected for the conveyor belts 206 of the individual conveyor belts 201 with a coefficient of static friction with respect to the packaging of the frozen products 300 greater than or equal to 0.2, preferably greater than or equal to 0.3, and more preferably greater than or equal to 0.4. Some of the materials used for the conveyor belts 206 are, for example, polyethylene belts or rubber-coated polypropylene belts.

In some embodiments of the present technology, a row of individual conveyor belts 201 is located on its own collecting conveyor belt 203, however, in other embodiments of the present technology, two or more rows of individual conveyor belts 201 are located on the same collecting conveyor belt 203 that receives the frozen products 300 from several rows of individual conveyor belts 201.

When the individual conveyor belts 201 are tilted to the inclined position, they are tilted at an angle of inclination 204 less than or equal to 45° to prevent the frozen products 300 from sliding on the individual conveyor belts 201 and hitting the collecting conveyor belt 203, thus preventing damage to packaging. Preferably, the angle of inclination 204 is less than or equal to 30°, more preferably the angle of inclination 204 is less than or equal to 20°, and even more preferably the angle of inclination 204 is less than or equal to 15°.

Between the lower end of the individual conveyor belts 201 in the inclined position and the collecting conveyor belt 203 there is a clearing 205 less than or equal to 200 mm, which is reduced to prevent the vacuum-sealed frozen products 300 from being damaged by falling when passing from the individual conveyor belts 201 to the collecting conveyor belt 203. Preferably, the clearing 205 is less than or equal to 100 mm and, more preferably, the clearing 205 is less than or equal to 60 mm.

In some embodiments of the present technology, the clearing 205 is greater than or equal to 50 mm to allow the vacuum-sealed frozen products 300 to be transferred onto the collecting conveyor belt 203 without risk of being damaged by accidental crushing against an individual conveyor belt 201 passing into an inclined position located above the frozen product 300 at the moment of descent.

However, in other embodiments of the present technology, the clearing 205 is less than or equal to 50 mm, and the clearing 205 may even be less than or equal to 10 mm. To prevent damage from accidental crushing, the controller 103 or the central controller 303 coordinates the descent of the individual conveyor belts 201 to the inclined position so that all the individual conveyor belts 201 containing selected frozen products 300 descend simultaneously to the inclined position or descend individually to the inclined position sequentially, starting with the individual conveyor belts 201 in the same row that are positioned furthest from their associated static scale 101.

In another aspect, the present technology relates to a combinatorial weighing system comprising at least one combinatorial weighing device 100 with at least one static scale 101 with retractable load conveyors 102 that descend to a retracted position to allow the weighing of frozen products 300 and rise to a raised position to remove the frozen products 300 weighed by the static scale 101, in at least one row of individual conveyor belts 201, where each individual conveyor belt 201 receives a frozen product 300 weighed on the at least one static scale 101, where each individual conveyor belt 201 is equipped with a set of actuators 202 that alternate the individual conveyor belts 201 between a horizontal position and an inclined position and that actuate the movement of a conveyor belt of each individual conveyor belt 201, and at least one collecting conveyor belt 203 that receives frozen products 300 weighed from the individual conveyor belts 201. The combinatorial weighing system further comprises a packaging conveyor belt 302 that receives products from each collecting conveyor belt 203 and a central controller 303 that receives the weight recorded by each static scale 101 for each frozen product 300 and associates it with the individual conveyor belt 201 that holds each frozen product 300.

The central controller 303 of the combinatorial weighing system evaluates different combinations of frozen products 300 held on the individual conveyor belts 201 of the combinatorial weighing devices 100 and selects the combination that minimizes a margin of overweight above a target weight. The central controller 303 then controls the actuator assemblies 202 of the individual conveyor belts 201 holding the selected frozen products 300 so that the actuator assemblies 202 tilt their respective individual conveyor belts 201 to an inclined position and transfer the selected frozen products 300 to each collection conveyor belt 203 and then from each collection conveyor belt 203 of the combination weighing devices 100 to the packaging conveyor belt 302.

In some embodiments of the present technology, the packaging conveyor belt 302 is bidirectional. Additionally, to prevent the vacuum-sealed frozen products 300 from being damaged by falling when passing from the collection conveyor belts 203 to the packaging conveyor belt 302, the height difference between the upper surface of the packaging conveyor belt 302 and the upper surface of the collection conveyor belts 203 is less than or equal to 200 mm, preferably less than or equal to 100 mm, and more preferably less than or equal to 60 mm.

In another aspect, the present technology relates to a method for combinatorial weighing comprising the steps of: providing a combinatorial weighing device 100 with at least one static balance 101 with retractable load conveyors 102, at least one row of individual conveyor belts 201 with conveyor bands 206 and actuator assemblies 202, at least one collection conveyor belt 203, and a controller 103; weighing frozen products 300 on the static scale 101 with the retractable load conveyors 102 in a retracted position, recording the weight of each frozen product 300; raising the retractable load conveyors 102 to a raised position to remove the frozen products 300 weighed by the static scale 101; transferring weighed frozen products 300 from the retractable load conveyors 102 to the row of individual conveyor belts 201 and between individual conveyor belts 201 until each individual conveyor belt 201 has a frozen product 300; associating, by means of the controller 103, the weight of each frozen product 300 with the individual conveyor belt 201 that holds it; evaluating, by means of the controller 103, different combinations of the frozen products 300 held on the individual conveyor belts 201; selecting the combination of frozen products 300 that minimizes a margin of overweight above a target weight; and activating the actuator assemblies 202 of the individual conveyor belts 201 holding the selected frozen products 300 so that the actuator assemblies 202 tilt their respective individual conveyor belts 201 to an inclined position and activate the transport belts 206 to transfer the selected frozen products 300 to the collection conveyor belt 203.

The method may further include the steps of transferring the frozen products 300 to a packaging receptacle 301 and actuating the actuator assemblies 202 of the individual conveyor belts 201 in an inclined position to return them to a horizontal position.

Additionally, where in the stage of activating the actuator assemblies 202, the individual conveyor belts 201 containing frozen products 300 descend individually to the inclined position sequentially, starting with the individual conveyor belts 201 in the same row that are positioned furthest from their associated static balance 101.

In other embodiments of the present technology, for certain weight optimizations where a large number of frozen product pieces 300 per distribution batch are required, the optimization and operation method is modified so that a first quantity of frozen products 300 is first weighed and transferred to the packaging receptacle 301, the controller 103 or central controller 303 stores the value of the sum of the weights of the first determined quantity of products 300, and then a weight difference between the stored sum and the target weight is determined, Finally, a second quantity of frozen products 300 is selected whose combination of frozen products 300, when added to the first quantity of frozen products 300, minimizes a margin of overweight with respect to the target weight following the method of operation described above.

### REFERENCE NUMBERS

In order to clarify this description, a list of the components of the invention and their respective references in the figures is included below.
- 100: Combinatorial weight device
- 101: Static scale
- 102: Retractable load conveyors
- 103: Controller
- 104: Indicator light
- 105: Half lifter
- 106: Retractable tape
- 107: Photoelectric sensor
- 201: Individual conveyor belt
- 202: Actuator assembly
- 203: Collecting conveyor belt
- 204: Angle of inclination
- 205: Clearing
- 206: Conveyor belt
- 300: Frozen product
- 301: Packaging container
- 302: Packaging conveyor belt
- 303: Central controller

Finally, it should be noted that various specific parameters of the invention, such as dimensions, choice of materials, and specific aspects of the preferred configurations described above, may vary or be modified depending on operational requirements. Consequently, the specific configurations described above are not intended to be limiting, and such variations and/or modifications are within the spirit and scope of the invention.

## Claims

1. A combinatorial weighing device (100) comprising:
at least one static scale (101) with retractable load conveyors (102) that descend to a retracted position to allow weighing of frozen products (300) and rise to a raised position to remove the frozen products (300) weighed by the static scale (101);
at least one row of individual conveyor belts (201), wherein each individual conveyor belt (201) receives a frozen product (300) weighed on the at least one static scale (101), wherein each individual conveyor belt (201) is equipped with a set of actuators (202) that alternate the individual conveyor belts (201) between a horizontal position and an inclined position and that actuate the movement of a conveyor belt of each individual conveyor belt (201);
at least one collecting conveyor belt (203) that receives weighed frozen products (300) from the individual conveyor belts (201); and
a controller (103), which receives the weight recorded by the static scale (101) for each frozen product (300) and associates it with the individual conveyor belt (201) holding each frozen product (300);
wherein the controller (103) evaluates different combinations of frozen products (300) held on the individual conveyor belts (201) and selects the combination that minimizes an overweight margin above a target weight; and
wherein the controller (103) controls the actuator assemblies (202) of the individual conveyor belts (201) holding the selected frozen products (300), so that the actuator assemblies (202) tilt their respective individual conveyor belts (201) to an inclined position and transfer the selected frozen products (300) to the collection conveyor belt (203).

2. The combinatorial weighing device (100) of claim 1, wherein the combinatorial weighing device (100) comprises at least two static scales (101) with retractable load conveyors (102), where each static scale (101) is associated with a row of individual conveyor belts (201) aligned with one of the static scales (101):

3. The combinatorial weighing device (100) of claim 1, wherein the combinatorial weighing device (100) comprises a packaging receptacle (301) at the end of the collection conveyor belt (203).

4. The combinatorial weighing device (100) of claim 3, wherein the packaging receptacle (301) has a load cell that communicates with the controller (103) or a central controller (303) if the packing receptacle (301) is loaded and/or communicates the weight of the load on the packing receptacle (301).

5. The combinatorial weighing device (100) of claim 1, wherein the static scales (101) are equipped with indicator lights (104) and photoelectric sensors (107).

6. The combinatorial weighing device (100) of claim 1, wherein the individual conveyor belts (201) have a polymeric covering.

7. The combinatorial weighing device (100) of claim 1, wherein the individual conveyor belts (201) are inclined toward the inclined position with an angle of inclination (204) less than or equal to 45°.

8. The combinatorial weighing device (100) of claim 1, wherein between the lower end of the individual conveyor belts (201) in the inclined position and the collecting conveyor belt (203) there is a clearing (205) less than or equal to 200 mm.

9. A combinatorial weighing system comprising:
at least one combinatorial weighing device (100) with:
at least one static scale (101) with retractable load conveyors (102) that descend to a retracted position to allow frozen products (300) to be weighed and rise to a raised position to remove the frozen products (300) weighed by the static scale (101);
at least one row of individual conveyor belts (201), wherein each individual conveyor belt (201) receives a frozen product (300) weighed on the at least one static scale (101), wherein each individual conveyor belt (201) is equipped with a set of actuators (202) that alternate the individual conveyor belts (201) between a horizontal position and an inclined position and that actuate the movement of a conveyor belt of each individual conveyor belt (201), and
at least one collecting conveyor belt (203) that receives weighed frozen products (300) from the individual conveyor belts (201);
a packing conveyor belt (302) that receives products from each collecting conveyor belt (203); and
a central controller (303) that receives the weight recorded by each static scale (101) for each frozen product (300) and associates it with the individual conveyor belt (201) that holds each frozen product (300);
wherein the central controller (303) evaluates different combinations of frozen products (300) held on the individual conveyor belts (201) and selects the combination that minimizes a margin of overweight above a target weight; and
wherein the central controller (303) controls the actuator assemblies (202) of the individual conveyor belts (201) holding the selected frozen products (300), so that the actuator assemblies (202) tilt their respective individual conveyor belts (201) to an inclined position and transfer the selected frozen products (300) to each collection conveyor belt (203) and then from each collection conveyor belt (203) to the packaging conveyor belt (302).

10. The combinatorial weighting system of claim 9, wherein the combinatorial weighting device (100) comprises at least two static scales (101) with retractable static scale load conveyors (102), wherein each static scale (101) is associated with a row of individual conveyor belts (201) aligned with one of the static scales (101).

11. The combinatorial weighing system of claim 9, wherein the system further comprises at least one packaging receptacle (301) at one end of the packaging conveyor belt (302).

12. The combinatorial weighing system of claim 11, wherein each packaging receptacle (301) has a load cell that communicates to the central controller (303) whether the packaging receptacle (301) is loaded and/or communicates the weight of the load on the packaging receptacle (301).

13. A method for combinatorial weighing comprising the steps of:
providing a combinatorial weighing device (100) with at least one static scale (101) with retractable load conveyors (102), at least one row of individual conveyor belts (201) with conveyor bands (206) and actuator assemblies (202), at least one collection conveyor belt (203) and a controller (103);
weighing frozen products (300) on the static scale (101) with the retractable load conveyors (102) in a retracted position, recording the weight of each frozen product (300);
raising the retractable load conveyors (102) to a raised position to remove the frozen products (300) weighed by the static scale (101);
transferring weighed frozen products (300) from the retractable load conveyors (102) to the row of individual conveyor belts (201) and between individual conveyor belts (201) until each individual conveyor belt (201) has a frozen product (300);
associating, by means of the controller (103), the weight of each frozen product (300) with the individual conveyor belt (201) that supports it;
evaluating, by means of the controller (103), different combinations of the frozen products (300) held on the individual conveyor belts (201);
selecting the combination of frozen products (300) that minimizes a margin of overweight above a target weight; and
actuating the actuator assemblies (202) of the individual conveyor belts (201) supporting the selected frozen products (300) so that the actuator assemblies (202) tilt their respective individual conveyor belts (201) to an inclined position and actuate the conveyor belts (206) to transfer the selected frozen products (300) to the collection conveyor belt (203).

14. The method for combinatorial weighting of claim 13, wherein the method further includes the steps of transferring the frozen products (300) to a packaging receptacle (301) and actuating the actuator assemblies (202) of the individual conveyor belts (201) in an inclined position to return them to a horizontal position.

15. The method for combinatorial weighing of claim 13, wherein in the step of actuating the actuator assemblies (202), the individual conveyor belts (201) containing frozen products (300) descend individually to the inclined position in sequence, starting with the individual conveyor belts (201) in the same row that are positioned furthest from their associated static balance (101).
